# EUROPEAN PATENT APPLICATION

(11) **EP 3 290 176 A1**
(43) Date of publication of application: **07.03.2018**
(21) Application number: 17183368.4
(22) Date of filing: 26.07.2017
(51) Int. Cl.: B28B 21/42, B28B 21/62, F16L 9/08

(54) **ULTRATHIN CONCRETE COMPOSITE PIPE WITH ORIENTED AND LOCALIZED FIBER**

(30) Priority: 15.08.2016 US 201662375195 P; 16.03.2017 US 201715461007
(71) Applicant: HawkeyePedershaab Concrete Technologies, Inc., Clayton, MO 63105 (US)
(72) Inventor: Subacchi, Claudio, Mediapolis, 52637 (US)
(74) Representative: Witte, Weller & Partner Patentanwälte mbB

(57) **Abstract**

A concrete layer having an upper surface and a lower surface, a first fiber layer having longitudinally oriented (102) and radially oriented (104) fiber embedded in the upper surface of the concrete layer, and a second fiber layering having longitudinally oriented and radially oriented fiber embedded in the lower surface of the concrete layer.

## Description

### CROSS-REFERENCE TO RELATED APPLICATIONS

The present application claims the benefit of U.S. Provisional Patent Application No. 62/375,195 filed August 15, 2016, the contents of which is incorporated herein by reference.

### TECHNICAL FIELD

This disclosure relates to a composite concrete pipe, and more specifically, this disclosure relates to a composite concrete pipe with radially and longitudinally oriented fiber.

### BACKGROUND INFORMATION

Concrete pipe has been around since the time of the Romans. Concrete is useful because the materials are readily available and easy to work with. The first types of concrete pipes were not reinforced. While concrete has a relatively high compressive strength, concrete has significantly lower tensile strength. When such pipes are subjected to tension, for example, when the pipe begins to sag, it will easily crack and produce a catastrophic failure of the pipe. One way to overcome the low tensile strength of the concrete is to increase the wall thickness, which leads to a heavier more expensive pipe.

The tensile strength of concrete pipe can be greatly improved with steel reinforcements. Steel has a very high tensile strength which adds to the tensile strength of the concrete pipe. Also, the steel in the pipes keeps the concrete pipe from collapsing even if the concrete is overloaded and cracked. The steel, however, needs to be a specific distance from the pipe inner and outer surfaces to avoid corrosion. That distance reduces the effectiveness of the steel (i.e., its ability to increase the tensile strength of the concrete), as well as increasing the thickness of the wall of the pipe.

Concrete pipes were further improved with fiber reinforcements. The fibers are dispersed in the concrete, similar to steel reinforcement. Fiber reinforcement increases the tensile strength of the concrete pipe to avoid a catastrophic failure. This kind of pipes has been relatively popular in Europe, but not as much in the United States. One possible reason for the lack of success of fiber reinforced pipe is that a relatively high amount of fiber is required, which is expensive. The unitary cost of the fiber per tensile strength and strain is much higher than steel.

Accordingly, there is a need for an improved composite pipe with the advantages of fiber reinforcement with benefits comparable to steel at a fraction of the weight and cost of steel and a fraction of the cost of prior fiber reinforcements.

### SUMMARY

In accordance with one aspect of the present invention, a concrete pipe is provided. The concrete pipe comprises of a concrete layer having an upper surface and a lower surface, a first fiber layer having longitudinally oriented and radially oriented fibers embedded in the upper surface of the concrete layer, and a second fiber layering having longitudinally oriented and radially oriented fibers embedded in the lower surface of the concrete layer. The first fiber layer can be embedded in the upper surface of the concrete layer at least 0.5 mm deep and less than 8 mm deep (and any vale in between). Furthermore, the second fiber layer can be embedded in the lower surface of the concrete layer at least 0.5 mm deep and less than 8 mm deep (and any value in between).

In one implementation, a polymer layer can be provided on the lower surface of the concrete layer for providing an environmental barrier to corrosive elements. A roughing substance can be provided between the polymer layer and the lower surface of the concrete layer to increase adhesion of the concrete layer to the polymer layer.

The foregoing concrete pipe has many advantages, including a ratio between the wall thickness and the inner diameter of at least 1 (wall thickness)/100 (inner diameter). This provides for a thin concrete pipe with a strength commensurate with a steel reinforced concrete pipe. Also, the concrete pipe can have an inner diameter that is substantially smooth with a Mannings Roughness Coefficient substantially equal to 0.009. This means the concrete pipe can have flow advantages of a polymer pipe.

### BRIEF DESCRIPTION OF THE DRAWINGS

These and other features and advantages of the present invention will be better understood by reading the following detailed description, taken together with the drawings wherein:
FIG. 1 is a concrete pipe comprising two fiber layers reinforcing a concrete layer according to an implementation from this disclosure.
FIG. 1A is an axial sectional view of a wall of the concrete pipe of FIG. 1.
FIG. 2 is a plan view of the fiber layer of the composite pipe of FIG. 1.
FIG. 3 is a concrete pipe comprising two fiber layers reinforcing two concrete layers with a polymer coating on the inner and outer walls.
FIG. 4 is an axial sectional view of a wall of the composite pipe of FIG. 3.
FIG. 4A shows a perspective view of the sectional view from FIG. 4.
FIG. 5 is a perspective view of applying by roving fiber onto a concrete pipe.
FIG. 6 is a flow chart for a method of manufacturing a composite pipe.

### DETAILED DESCRIPTION OF THE ILLUSTRATED EMBODIMENTS

Disclosed is an ultra-thin concrete pipe with oriented and localized fiber. The disclosed concrete pipe has less fiber than prior art concrete pipes. This is due to the fact that the fiber is specifically oriented and localized near the outer and inner surfaces of the concrete pipe at the location of the maximum tensile load and generated strain. The fiber in the prior art concrete pipes is dispersed randomly in the concrete, which means much of the fiber is not being utilized to resist the loads on the concrete pipe.

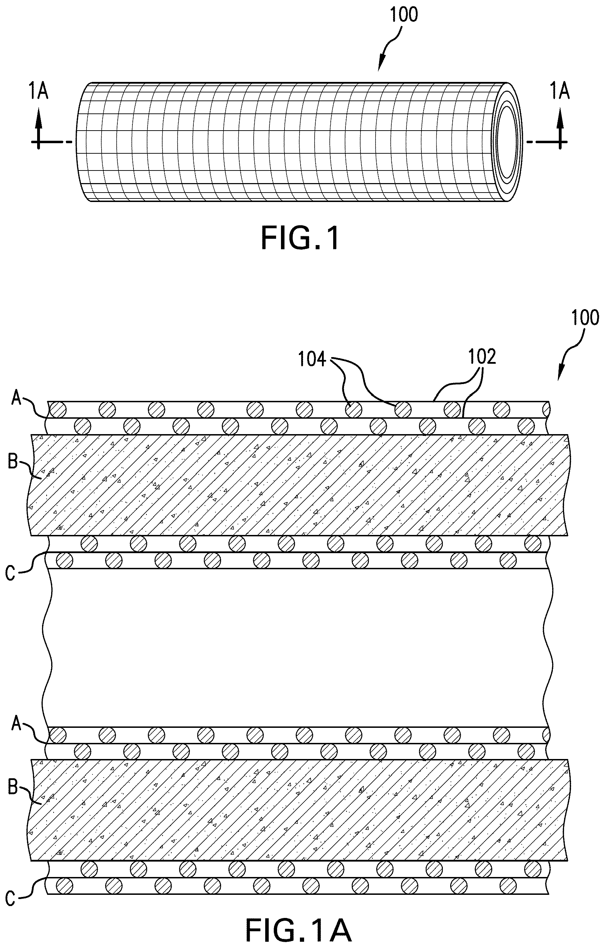

FIGs. 1 shows an axial sectional view of a wall 100 of a concrete pipe comprising two fiber layers designated as "A" and "C" reinforcing a concrete layer designated as "B." Each fiber layer A and C has a combination of longitudinally oriented fibers 102 and radially oriented fibers 104. Radially oriented fibers 104 resist tension, i.e., they resist the tensile resultant from a load applied radially (crushing or internal pressure). Longitudinally oriented fibers 102 resist the resultants from a load that is applied in a plane orthogonal to the upper mentioned load schema. This is also referred to as beam effect or beam bending, where the pipe is supported and loaded like a beam. This occurs, for example, when the pipe is buried under the ground and begins to sag over time. Again, the distinction between fiber layers A and C and the fiber used in the prior art concrete pipes is the orientation of the fibers. Prior art fibers are dispersed randomly whereas fiber layers A and C are longitudinally oriented and radially oriented. For the purpose of this disclosure, longitudinally oriented can range from zero degrees (0°), which would be parallel to a central axis of a concrete cylinder to eight nine degrees (89°), which is one degree short of perpendicular or radially oriented. The angle can be any angle between that range. Using trigonometry it can be determined how much of the fiber is acting longitudinally and how much is acting radially. The same can also be said for the range of radially oriented. The important note is that the fiber is specifically oriented and localized, rather than randomly dispersed.

Fiber layers A and C can be a tape that is spirally wrapped with some overlap, a mesh that will have some overlap, a series of individual roving wrapped spirally or radially with some longitudinal roving to form a mesh-like fiber reinforcement, or provided in a woven or unwoven mat form, fabric, strands, slivers, cables, tapes, roving, etc. The fiber layers A and C can also comprise a plurality of spaced (not connected) ribbons that will be spirally wound on a previously deposited concrete layer. In this implementation, the wrapping pitch of the ribbons will provide some longitudinal reinforcement that is determined from the helix angle (if the helix angle is 90 degrees the ribbons are longitudinal, or if the helix angle tends toward 0 degrees the ribbons will provide increasing radial reinforcement). Fiber layers A and C can be made of natural fibers like hemp, cotton, sisal, etc., or synthetic fibers like nylon, polyethylene terephthalate, acrylic fibers, etc., and/ or fuzed quartz, aluminum-silicate, ceramic spun fibers, etc., with fibers of both organic and inorganic fibrous materials being used together in any combination, or used alone, to provide the non-metallic reinforcement. In one implementation, fiber layers A and C are comprised of a basalt reinforcing mesh that is commercially available off the shelf fiber wrap.

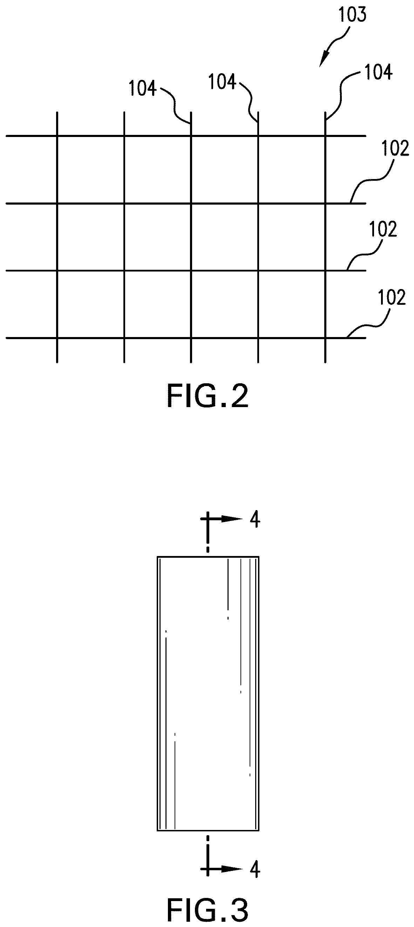

FIG. 2 shows a plan view of a fiber mesh 103 for layer A comprising a commercially available basalt reinforcing fiber mesh. Fiber layer A can have properties similar to those in Tables 1 through 4:

**Table 1**

| | |
|---|---|
| Mesh window size,mm 25 x 25 | 25 x 25 |
| Surface density g/m2 | 220 ± 10 |
| Breaking load, kN/m | Warp > 50.0 |
| | Weft > 50.0 |
| Elongation at break, % | 2.5±1% |
| Roll width,m | 1, 2, 4 |
| Roll length,m | 50 - 100 |

**Table 2**

| | |
|---|---|
| Mesh window size,mm | 30 x 30 |
| Surface density g/m2 | 320 ± 10 |
| Breaking load, kN/m | Warp > 55. |
| | Average figures = 60 - 63 |
| | Weft > 55. |
| | Average figures = 63 - 66 |
| Elongation at break, % | 2.5±1% |
| Roll width,m | 1, 2, 4 |
| Roll length,m | 100 |

**Table 3**

| | |
|---|---|
| Mesh window size,mm | 25 x 25 |
| Surface density g/m2 | 220 ± 10 |
| Breaking load, kN/m,min | Warp > 50 |
| | Weft > 50 |
| Elongation at break, % | 2.5 ± 1% |
| Roll width,m | 1 |
| Roll length,m | 50 |

**Table 4**

| | |
|---|---|
| Mesh window size,mm | 3.5 x 3.5 |
| Surface density g/m2 | 100 ± 15 |
| Breaking load, N/cm,min | Warp > 1300 |
| | Weft > 1300 |
| Roll width,m | 1 |
| Roll length,m | 100 |

Layer A comprises longitudinally oriented fibers 102 and radially oriented fibers 104. In this regard, it is clear that longitudinally oriented fibers 102 and radially oriented fibers 104 are oriented orthogonally with respect to each other. When the mesh is applied, the fibers in fiber layer A are longitudinally oriented and radially oriented around the concrete pipe. Mesh 103 comprising longitudinally oriented fibers 102 and radially oriented fibers 104 can also be applied at an angle.

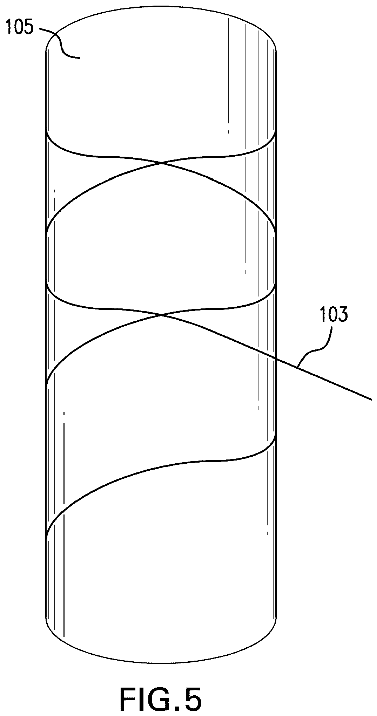

FIG. 5 shows a roving application of a fiber 103 on to a concrete pipe 105. In this case, if fiber 103 is applied at an angle; for example, at a forty-five degree (45°) angle, fifty percent (50%) of the fiber work radially and fifty percent (50%) of the fiber work axially.

The spacing between longitudinally oriented fibers 102 and radially oriented fibers 104 can range from 1mm to 35 mm (and any value in between). Fiber mesh 103 can have a ratio between longitudinal, which provides the radial reinforcement on the concrete pipe, and transversal, which provides longitudinal reinforcement on the concrete pipe, in weight that is from 0 (only radial reinforcement) to 1:3 (axial reinforcement 3 times heavier than radial).

Fiber layers A and C are also localized near the outer and inner surfaces of the concrete pipe at the location of the maximum tensile load and generated strain. While FIG. 1 shows fiber layers A and C as discrete layers separate from concrete layer B, in practice, fiber layers A and C are embedded in concrete layer B about 0.5-8 mm (or any value in between). Fiber layers A and C are embedded in concrete layer B a sufficient distance for fiber layers A and C to adhere to the concrete, but close enough to the outer and inner surfaces to maximize tensile strength. In implementations where fiber layers A and C are non-corrosive fibers, this is a significant improvement over steel fiber that must be embedded more than 1 inch deep in the concrete to avoid corrosion.

The advantage of localizing fiber layers A and C near the respective outer and inner surfaces of the concrete pipe is to maximize tension. The thickness of wall 100 of the concrete pipe is very thin. In some examples, a ratio of a thickness of wall 100 to the diameter of the concrete pipe can range from 1/100 to 15/100 (and any value in between). This means for a 24-inch diameter concrete pipe, the wall thickness can be less than a quarter inch thick (i.e., 0.24"). It is also possible to have a wall thickness as thin as 5mm with a 150mm inner diameter pipe for an ID/thickness ration of 30. The wall thickness can be increased from that value based on the load requirments.

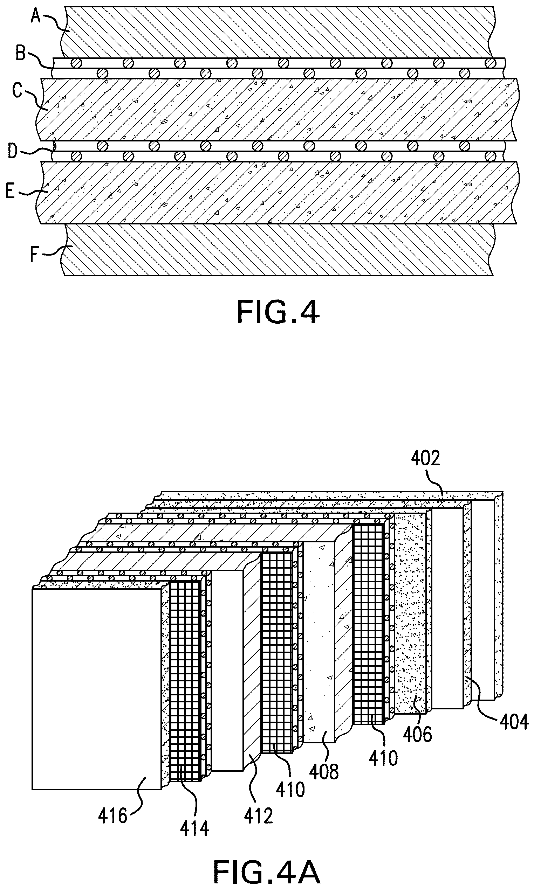

In another implementation, the concrete pipe can comprise multiple concrete layers with a lined inner and outer walls. FIG. 4 shows an axial sectional view of a wall 200 of a concrete pipe comprising two fiber layers reinforcing two concrete layers with a polymer coating on the inner and outer walls. Wall 200 can comprise the following six layers:
A is an outer polymer layer that serves as an environmental barrier to corrosive elements;
B is a first fiber layer with longitudinally oriented and radially oriented fibers;
C is a concrete layer;
D is a second fiber layer with longitudinally oriented and radially oriented fibers;
E is another concrete layer; and
F is an inner polymer layer that serves as an environmental barrier to corrosive elements.

Fiber layers B and D can be the same as fiber layers A and C discussed with respect to FIG. 1. Similarly, Fiber layers B and D are embedded in concrete layers C and E. An inner polymer layer F can be applied to serve as an environmental barrier to corrosive elements. A further outer polymer layer A can be applied to serve as an environmental barrier to corrosive elements. In this regard, the inside of the concrete pipe is protected from the corrosiveness of fluid traveling through the concrete pipe, and the outer surface is protected from moisture and other environmental corrosive elements. The manufacturing process for manufacturing concrete pipes consistent with wall 100, described in connection with FIG. 1, and wall 200, described in connection with FIG. 4, will be described below.

In another implementation, there can be more than two fibers layers with each spaced by a minimal layer of concrete (i.e., just enough to provide the needed compressive strength for the application). In this implementation, the pipe thickness cross-section will comprise multiple layers of fiber thinly separated by a layer of concrete.

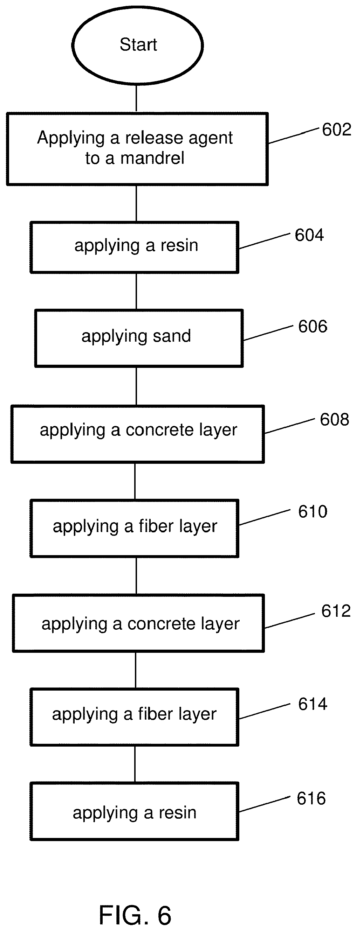

The following method, as shown in FIG. 6, is directed to manufacturing a concrete pipe on a mandrel. The mandrel can be a plastic mandrel, although any type of mandrel can be provided, such as a steel or aluminum mandrel with highly polished surface, an organic polymer mandrel, or other mandrel covered a film or sheet or a coat of polyester resin. It is important that the mandrel have a thermal shrinkage rate less than concrete so that the concrete pipe can be removed. The mandrel can be spray-spun by revolving the mandrel beside a mounted spray gun on a sliding or geared support so that the sprayer travels up and down the length of the mandrel so that an even amount coat of material is deposited on the mandrel. An organic polymer mandrel can be shrunk with heat to allow the completed pipe to slide off.

The method begins at step 602 with applying a release agent such as a wax or polyvinol alcohol (PVA) is applied to the mandrel.

The method continues at step 604 with applying a resin such a polymer, including any type of organic polymer, is applied on the release agent. This constitutes layer F in FIG. 4. The polymer forms an environmental barrier to the inner core of the concrete pipe. The resin can be applied so that is about 5mm thick and forms a substantially smooth surface. In this context, a substantially smooth surface on the inner diameter of the concrete pipe has a Manning's roughness coefficient of about 0.009 to 0.015 (or any value in between), which is about the same as Polyethylene PE, whereas finished concrete may have a Manning's roughness coefficient of 0.012.

Before the resin is cured, the method continues at step 606 with applying a thin layer of an abrasive, such as sand, is applied on the resin. In this context, a thin layer is generally about 0.25 to 2.0mm thick (or any value in between). This is about the coarseness of 60 grit sand paper and creates sandpaper like finish after curing.

Next, the method continues at step 608 with applying a concrete layer on top of the resin. This can be done before or after the resin has fully cured. This constitutes layer E in FIG. 4. The concrete can be of any mixture or composition. The abrasive on the resin creates a mechanical bond between the concrete and the resin.

Before the concrete layer E cures, the method continues at step 610 with applying a fiber layer D. The fiber layer can be a mesh, as shown in FIG. 2, and helically wrapped around the concrete layer E. The wrapping can be applied on the helical angle of 0 - 20 degree (or any value in between), and embedded in the concrete layer E about 2-3mm deep, as described above.

The method continues at step 612 with applying another concrete layer. This is layer C in FIG. 5, and before the concrete cures, the method continues at step 614 with applying another fiber layer in a similar manner and embedded in the concrete layer. This is layer B in FIG. 4. Finally, the method concludes at step 616 with applying another resin layer to provide an environmental barrier to the outer shell of the concrete pipe. This is layer F in FIG. 4. Thereafter, the pipe can be removed from the mandrel, for example, as described above an organic polymer mandrel can be shrunk with heat to allow the completed pipe to slide off.

The foregoing manufacturing method can be carried out in a number of different manners. The fiber layers, for example, can be applied with conveyor oriented tangentially with the rotating mandrel so that the fiber layers are oriented radially and longitudinally at a zero-degree helical angle.

While the principles of the invention have been described herein, it is to be understood by those skilled in the art that this description is made only by way of example and not as a limitation as to the scope of the invention. Other embodiments are contemplated within the scope of the present invention in addition to the exemplary embodiments shown and described herein. Modifications and substitutions by one of ordinary skill in the art are considered to be within the scope of the present invention, which is not to be limited except by the following claims.

## Claims

1. A concrete pipe comprising:
a concrete layer having an upper surface and a lower surface;
a first fiber layer having longitudinally oriented and radially oriented fiber embedded in the upper surface of the concrete layer; and
a second fiber layering having longitudinally oriented and radially oriented fiber embedded in the lower surface of the concrete layer.

2. The concrete pipe of claim 1, wherein at least the first fiber layer or the second fiber layer is embedded in the upper surface of the concrete layer at least 0.5 mm deep and less than 8 mm deep.

3. The concrete pipe of claim of claim 1 or 2, and further comprising at least a polymer layer on the upper surface or on the lower surface of the concrete layer for providing an environmental barrier to corrosive elements.

4. The concrete pipe of claim 3, and further comprising an abrasive substance between the polymer layer and the lower surface of the concrete layer to increase adhesion of the concrete layer to the polymer layer.

5. The concrete pipe of claim 4, wherein the abrasive substance is one chosen from a sand, silica, and ceramic substance.

6. The concrete pipe of any of claims 1 to 5, wherein the concrete pipe has a wall thickness and inner diameter, wherein the ratio between the wall thickness and the inner diameter is at least 1 (wall thickness)/100 (inner diameter).

7. The concrete pipe of any of claims 1 to 6, wherein the lower surface can correspond with an innner diameter of the concrete pipe and be substantially smooth with a Mannings Roughness Coefficient substantially equal to 0.009.

8. The concrete pipe of any of claims 1 to 7, wherein the first fiber layer and the second fiber layer are each spirally wrapped around the concrete layer and applied at an angle in a range between 0° and 85° on a helical angle.

9. The concrete pipe of any of claims 1 to 8, wherein the longitudinally oriented and radially oriented fiber in the first fiber layer consists of a single fiber strand applied at an angle so that a portion of the single fiber strand is longitudinally oriented and another portion of the single fiber strand is radially oriented.

10. A method of manufacturing a concrete pipe on a mandrel comprising:
applying a concrete layer;
applying a fiber layer consisting of radially oriented fiber and longitudinally oriented fiber to an inner diameter of the concrete layer; and
applying a fiber layer consisting of radially oriented fiber and longitudinally oriented fiber to an outer diameter of the concrete layer.

11. The method of claim 10, and further comprising:
applying a release agent to the mandrel;
applying a first resin layer on the release agent for forming an environmental barrier on an inner diameter of the concrete pipe;
applying a thin layer of sand on the release agent; and
applying a first concrete layer to the mandrel.

12. The method of claim 10 or 11, and further comprising applying a second resin layer for forming an environmental barrier on an outer diameter of the concrete pipe.

13. The method of any of claims 10 to 12, and further comprising embedding the fiber layer positioned on the inner diameter of the concrete layer in the concrete layer in a range of two to three millimeters deep, and embedding the fiber layer positioned on the outer diameter of the concrete layer in the concrete layer in a range of two to three millimeters deep.

14. The method of any of claims 10 to 13, further comprising heat shrinking the mandrel to remove the concrete pipe.

15. The method of any of claims 10 to 14, and further comprising applying the fiber layer using a single strand of fiber and applying the single strand of fiber at an angle so that a portion of the single strand of fiber is radially oriented and another portion of the single strand of fiber is longitudinally oriented.
